Europäisches Patentamt

(19) European Patent Office

Office européen des brevets

(11) Numéro de publication: **0 027 218**
**B1**

(12) **FASCICULE DE BREVET EUROPEEN**

(45) Date de publication du fascicule du brevet: **06.04.83**

(21) Numéro de dépôt: **80106002.1**

(22) Date de dépôt: **03.10.80**

(51) Int. Cl.³: **G 01 N 23/04,**
**G 03 B 37/00**

(54) **Cassette réfrigérée pour film gammagraphique.**

(30) Priorité: **10.10.79 FR 7925192**

(43) Date de publication de la demande:
**22.04.81 Bulletin 81/16**

(45) Mention de la délivrance du brevet:
**06.04.83 Bulletin 83/14**

(84) Etats contractants désignés:
**AT BE CH DE FR GB IT LI LU NL SE**

(56) Documents cités:
**FR - A - 1 172 264**
**GB - A - 906 406**
**US - A - 4 051 369**

(73) Titulaire: **ALSTHOM-ATLANTIQUE Société anonyme dite:**
**38, Avenue Kléber**
**F-75784 Paris Cedex 16 (FR)**

(72) Inventeur: **Carton, Jean**
**18, Cité Foy**
**F-93350 Le Bourget (FR)**

(74) Mandataire: **Weinmiller, Jürgen et al,**
**Zeppelinstrasse 63**
**D-8000 München 80 (DE)**

Courier Press, Leamington Spa, England.

Cassette réfrigérée pour film gammagraphique

L'invention est relative à une cassette réfrigérée pour contenir un film gammagraphique destiné par exemple au contrôle de la qualité des soudures d'un arbre de turbine.

La fabrication des arbres de turbines par soudage est connue depuis longtemps. Elle comporte les phases suivantes:

— empilage vertical des éléments d'arbre à souder qui sont usinés de manière s-emboîter en laissant entre eux des gorges circulaires
— chauffage de l'ensemble à une température de l'ordre de 300°C
— soudage, de préférence sous argon du fond des gorges, en plusieurs passes, dites passes de fond,
— mise en position horizontale de l'arbre,
— remplissage des gorges par soudage automatique multipasses,
— recuit de détente.

Un contrôle de la qualité de la soudure réalisée par les passes de fond est exécuté avant l'exécution des passes de remplissage.

Ce contrôle est effectué par gammagraphie; à cet effet une source radioactive émettrice de rayons gamma est introduite à l'intérieur de l'arbre et maintenue fixe sur l'axe de l'arbre.

Un film sensible aux rayons gamma, est placé dans la gorge délimitée par deux éléments d'arbre soudés, et est exposé un temps suffisant au rayonnement gamma qui traverse la soudure. Après développement, le film fait apparaître d'éventuels défauts de la soudure, tels que fissures, manque de pénétration de la soudure, etc.

Un tel contrôle de qualité par gammagraphie nécessite un refroidissement préalable des pièces soudées qui, comme il a été dit plus haut, sont portées pour les besoins d'une bonne technique de soudage, à une température voisine de 300°C. En effet, un film gammagraphique ne peut supporter une température de plus de 40°C et les temps de pose nécessités par la prise d'un cliché vont de 15 minutes à une heure et demie selon le degré d'"activité" de la source radioactive.

On comprend donc que la prise des clichés de contrôle nécessite un refroidissement préalable des pièces, de 300°C à une température voisine de l'ambiante.

Or ce refroidissement nécessite un temps qui peut atteindre plusieurs jours lorsque les pièces sont de fort volume, comme le sont par exemple les arbres d'une turbine à vapeur pour groupe de 1 300 Mégawatts.

Si, par extraordinaire, un défaut de soudage est détecté, il faut réchauffer la pièce, réparer le défaut, refroidir et faire un nouveau cliché.

Ces opérations nécessitent un temps considérable (jusqu'à 10 jours) qui immobilise le poste de soudage. Or la majeure partie du temps d'immobilisation est due au refroidissement; le temps de refroidissement ne pouvant être réduit, on a recherché un moyen de réduire le temps d'immobilisation du poste de soudage en effectuant les gammagraphies alors que les pièces soudées sont encore à une température élevée.

Dans ce but, on a réalisé des cassettes porte-films réfrigérées de manière à maintenir le film à une température supportable lorsqu'il est placé au voisinage d'une pièce métallique portée à une température de l'ordre de 200°C et plus.

Les cassettes réalisées antérieurement ne donnaient pas satisfaction. Dans certaines cassettes à refroidissement par air, le refroidissement était insuffisant dans l'application considérée. D'autres cassettes comportaient un film d'eau interposé entre le film et la source de chaleur et de rayonnement. Le refroidissement était suffisant, mais le cliché était perturbé par la couche d'eau qui introduisait des images parasites sur le film.

Un but de l'invention est de réaliser une cassette qui ne présente pas les inconvénients précités.

L'invention a donc pour objet une cassette pour film gammagraphique caractérisée par le fait qu'elle comprend un profilé métallique ayant un fond et deux bords latéraux, en matériau bon conducteur de la chaleur, et au moins un tube soudé à un desdits bords sur au moins une partie de celui-ci parallèlement au fond du profilé et parcouru par un fluide de refroidissement, l'espace compris entre le tube et le fond étant suffisant pour permettre l'introduction d'un film gammagraphique.

Selon un mode de réalisation particulier lorsque les pièces à radiographier sont circulaires, le fond de la cassette est incurvé.

Avantageusement, la cassette comprend un seul tube de refroidissement dont une première extrémité correspondant à l'entrée du fluide de refroidissement et une seconde extrémité correspondant à la sortie dudit fluide sont disposés sensiblement au milieu de la cassette, le tube s'étendant sur les deux bords de la cassette et étant replié en U à chaucune des extrémités de la cassette.

De préférence, le profilé est fait d'un métal choisi parmi le cuivre et le laiton.

Avantageusement, l'épaisseur du profilé est compris entre 3 et 10 dizièmes de millimètres, ce qui permet un échange par conduction correct sans perturber la qualité de l'image gammagraphique.

L'invention sera bien comprise par la description, donnée ci-après d'un mode de réalisation de l'invention, en référence au dessin annexé dans lequel:—

La figure 1 est une vue en élévation d'une cassette selon un mode de réalisation,

La figure 2 est une vue, agrandie, en coupe selon la ligne II—II de la figure 1,

La figure 3 est une vue en coupe selon la ligne III—III de la figure 1,

La figure 4 est une vue en élévation d'une cassette à fond incurvé,

La figure 5 montre un exemple d'application de la cassette porte-film à la gammagraphie d'une soudure d'un arbre de turbine. Les figures 1, 2 et 3 représentent une cassette porte-films selon un premier mode de réalisation. Elle comprend essentiellement un profilé 1 ayant un fond 2 et des bords 3 et 4. Ce profilé est réalisé en métal bon conducteur de la chaleur (cuivre ou laiton) d'épaisseur comprise entre 3 et 10 dizièmes de millimètres.

A l'intérieur est disposé un tube 5 (en cuivre ou laiton), qui est soudé sur les bords du profilé. L'entrée 6 et la sortie 7 du tube débouchent sensiblement au centre du profilé; le tube, soudé sur une première moitié du bord 3 du profilé est recourbé à une extrémité 10, soudé sur le bord opposé 4 sur toute sa longueur, recourbé à l'autre extrémité 11 du profilé et soudé sur la seconde moitié du bord 3.

Entre le tube 5 et le fond 2 est disposée une paroi mince 13 en cuivre ou en laiton délimitant avec le fond 2 un logement pour le film.

L'entrée du tube est reliée à une source de fluide de refroidissement non représentée, qui peut être simplement de l'eau à température ambiante (de l'ordre de 20°C) à la pression normale de distribution de l'eau de ville.

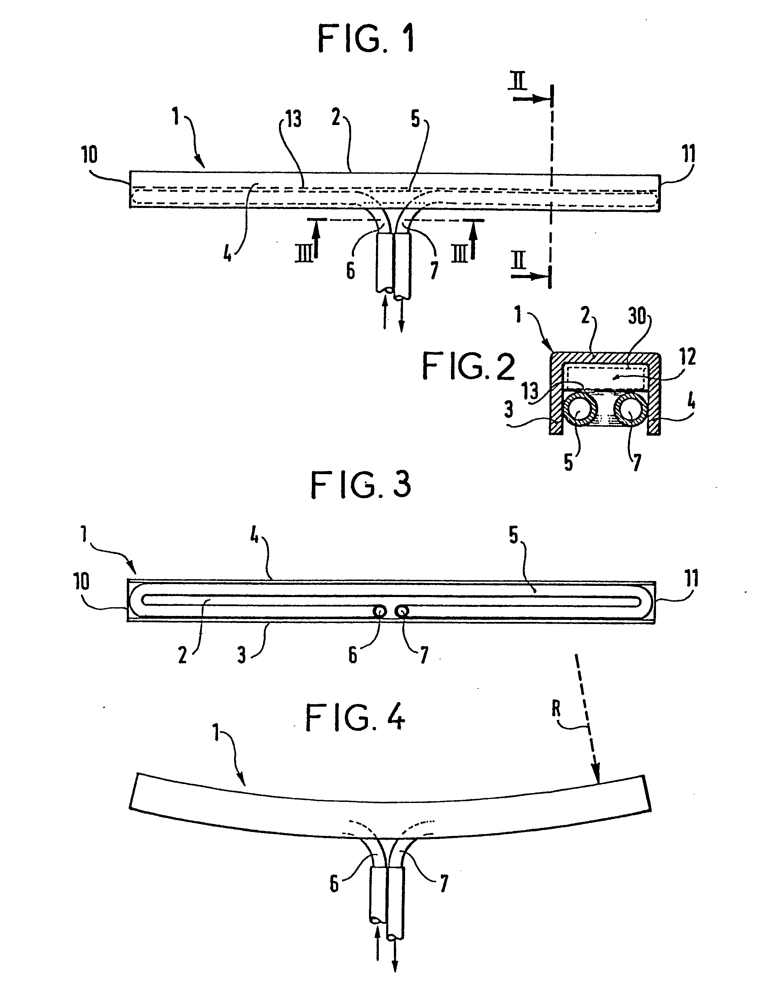

L'espace 12 délimité par le fond 2, les bords 3 et 4 et la paroi 13 (figure 2) permet l'introduction d'un film gammagraphique 30 muni de ses écrans renforçateurs. Le fond 2, qui est tourné du côté de la soudure à radiographier, n'est pas un obstacle pour les rayons gamma, mais joue au contraire le rôle de renforçateur connu des techniciens de la gammagraphie. Une fois le film introduit on peut boucher les deux extrémités du logement par des bouchons adjustés ce qui rend le logement étanche à la lumière.

Pour la radiographie des soudures d'arbres de turbine, on pourra donner un certain rayon de courbure R au fond 2 comme le montre la figure 4.

A titre d'exemple, on peut réaliser une cassette de 820 mm de longueur, pouvant contenir deux films de 400 mm, ayant un rayon de courbure de 730 mm.

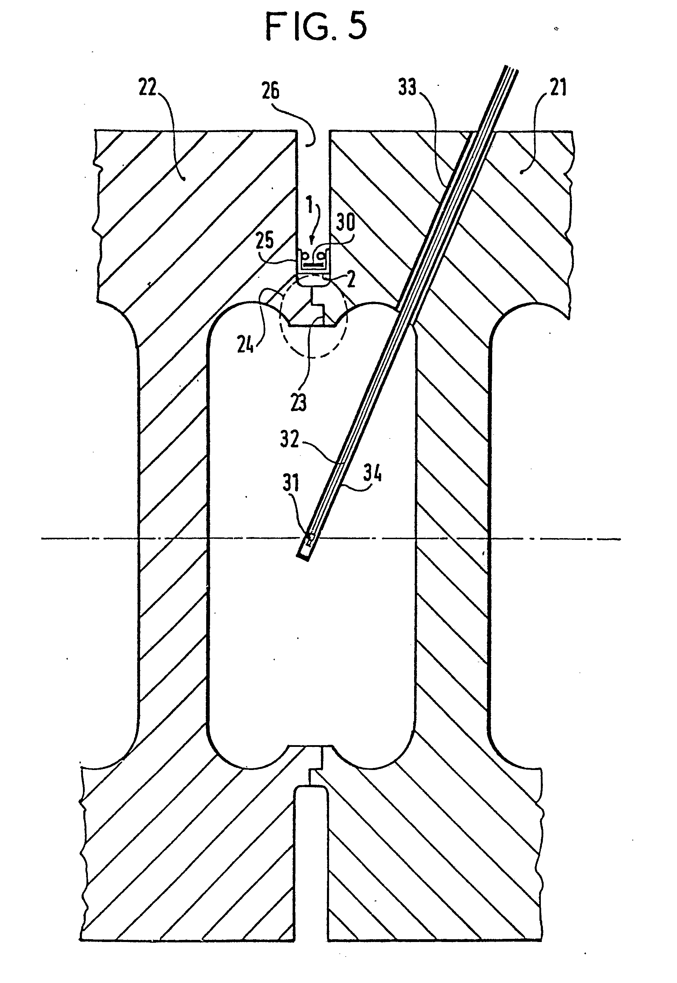

La figure 5 montre un exemple d'application à la gammagraphie de deux éléments d'arbre 21 et 22, soudés le long de leur ligne de contact 23. La zone 24, entourée d'un cercle en tireté, est, après les passes de fond, complètement refondue.

La cassette 25 pour gammagraphie est disposée dans la gorge 26 formée par les éléments d'arbre, avec son fond 2 tournée vers le fond de la gorge. Le film gammagraphique 30 est visible dans la figure 5.

Il est soumis au rayonnement d'une source radioactive 31, maintenue au centre de l'arbre à l'extrémité d'un flexible 32 enfermé dans un tube 34 pénétrant par une cavité 33 pratiquée dans l'élément d'arbre 21.

La cassette de l'invention trouve application dans tous les cas où on désire faire une gammagraphie d'une soudure sans attendre le refroidissement des pièces (soudage de chaudières, de pièces de grosses chaudronnerie, etc...).

Grâce à la bonne conduction thermique de tous ses éléments constitutifs, la cassette de l'invention assure un bon refroidissement du film puisqu'il est possible de radiographier sans danger des pièces à 200°C ou plus. On a même opéré à la température de 280°C sans dommage pour le film. Son encombrement faible l'autorise à toutes les applications, en particulier dans le cas de soudures au fond de gorges. Elle peut être aisément fixé, par tous moyens sur les pièces à contrôler. Elle assure un parfait maintien du film et elle peut être étanche à la lumière par l'utilisation d'une paroi séparant le tube, du fond de la cassette et de bouchons aux extrémités du logement ainsi délimité.

## Revendications

1. Cassette réfrigérée pour film gammagraphique caractérisée par le fait qu'elle comprend un profilé (1) métallique ayant un fond (2) et deux bords latéraux (3 et 4), en matériau bon conducteur de la chaleur, et au moins un tube soudé (5) à un desdits bords sur au moins une partie de celui-ci parallèlement au fond du profilé et parcouru par un fluide de refroidissement, l'espace compris entre le tube et le fond étant suffisant pour permettre l'introduction d'un film gammagraphique.

2. Cassette selon la revendication 1, caractérisée par le fait que le fond (2) de la cassette est incurvé.

3. Cassette selon l'une des revendications 1 et 2, caractérisée par le fait que le profilé (1) est d'un métal choisi parmie le cuivre et le laiton.

4. Cassette selon la revendication 3, caractérisée par le fait que l'épaisseur du profilé (1) est compris entre 3 et 10 dizièmes de millimètres.

5. Cassette selon l'une des revendications 1 à 4, caractérisée par le fait que la cassette comprend un seul tube (5) de refroidissement dont une première extrémité (6) correspondant à l'entrée du fluide de refroidissement et une second extrémité (7) correspondant à la sortie dudit fluide sont disposés sensiblement au milieu de la cassette, le tube s'étendant sur les deux bords (3 et 4) de la cassette et étant replié en U à chacune des extrémités (10 et 11) de la cassette.

**Patentansprüche**

1. Gekühlte Kassette für gammagraphischen Film, dadurch gekennzeichnet, daß sie eine Metallschiene (1) aufweist, die einen Boden (2) und zwei Seitenränder (3 und 4) besitzt, aus gut wärmeleitendem Material, und mindestens ein Rohr (5), das an einen der Ränder über zumindest einen Teil dieses Rands parallel zum Boden der Schiene angeschweißt ist und das von einem Kühlfluid durchflossen wird, wobei der Zwischenraum zwischen dem Rohr und dem Boden ausreichend groß ist, um die Einführung eines gammagraphischen Films zu ermöglichen.

2. Kassette nach Anspruch 1, dadurch gekennzeichnet, daß der Boden (2) der Kassette gebogen ist.

3. Kassette nach einem der Ansprüche 1 und 2, dadurch gekennzeichnet, daß die Schiene (1) aus einem Metall besteht, das aus Kupfer und Messing ausgewählt wird.

4. Kassette nach Anspruch 3, dadurch gekennzeichnet, daß die Dicke der Schiene zwischen 0,3 mm und 1 mm beträgt.

5. Kassette nach einem der Ansprüche 1 bis 4, dadurch gekennzeichnet, daß die Kassette ein einziges Kühlrohr (5) aufweist, von dem ein erstes Ende (6), das dem Kühlfluideingang entspricht und ein anderes Ende (7), das dem Kühlfluidausgang entspricht, im wesentlichen in der Mitte der Kassette angeordnet ist, wobei das Rohr sich über die beiden Ränder (3 und 4) der Kassette erstreckt und an jedem der Enden (10 und 11) der Kassette U-förmig gebogen ist.

**Claims**

1. A cooled film cassette for gamma radiography, characterized by the fact that it comprises a channel section metal bar (1) with a web (2) and two flanges (3 and 4) which is a good conductor of heat, and at least one tube (5) welded to at least one of said flanges over at least a part thereof parallel to the web, conveying a cooling fluid flowing therethrough, the space lying between the tube and the web being sufficient to receive a gamma radiography film.

2. A cassette according to claim 1, characterized by the fact that the web (2) of the cassette is curved.

3. A cassette according to any one of the claims 1 and 2, characterized by the fact that the bar (1) is made of a metal chosen from among copper and brass.

4. A cassette according to claim 3, characterized by the fact that the thickness of the bar (1) lies between 3 and 10 tenths of a millimeter.

5. A cassette according to any one of claims 1 to 4, characterized by the fact that it includes a single cooling tube (5), a first end (6) of which corresponds to the cooling fluid inlet and a second end (7) of which corresponds to the cooling fluid outlet, said ends being disposed substantially in the middle of the cassette, the tube extending along the flanges (3 and 4) of the cassette and being bent back in a U-shaped configuration at each end (10 and 11) of the cassette.

0 027 218

## FIG. 1

## FIG. 2

## FIG. 3

## FIG. 4

1

# FIG. 5